# EUROPÄISCHE PATENTSCHRIFT

(11) **EP 3 849 860 B1**
(45) Veröffentlichungstag und Bekanntmachung des Hinweises auf die Patenterteilung: **28.02.2024**
(21) Anmeldenummer: 19758362.8
(22) Anmeldetag: 15.08.2019
(51) Int. Cl.: B60T 7/20, B60T 8/32, B60T 8/36, B60T 13/66, B60T 13/68

(54) **RELAISVENTILMODUL ZUR VERWENDUNG ALS ACHSMODULATOR UND ANHÄNGERSTEUERMODUL**
RELAY VALVE MODULE FOR OPERATING AS AXLE MODULATOR AND AS TRAILER CONTROL MODUL
VALVE RELAIS POUR UN USAGE DE MODULATEUR D'AXE, DE MODULE DE COMMANDE D'UNE REMORQUE

(30) Priorität: 12.09.2018 DE 102018122193
(43) Veröffentlichungstag der Anmeldung: 21.07.2021
(73) Patentinhaber: ZF CV Systems Europe BV, 1170 Brussels (BE)
(72) Erfinder: MÜLLER, Thomas, 30655 Hannover (DE); OTREMBA, Robert, 30952 Ronnenberg (DE); VAN THIEL, Julian, 30161 Hannover (DE); ROTERS, Gerd, 31515 Wunstorf (DE)
(74) Vertreter: Rabe, Dirk-Heinrich
(86) Internationale Anmeldenummer: PCT/EP2019/071945
(87) Internationale Veröffentlichungsnummer: WO 2020/052903

(56) Entgegenhaltungen:
- EP-A1- 3 112 230
- DE-A1-102015 001 628
- DE-A1-102015 011 296

## Beschreibung

Die Erfindung betrifft ein Relaisventilmodul für ein elektronisch steuerbares pneumatisches Bremssystem für die Betätigung von Radbremsen eines Nutzfahrzeugs, mit einem Vorratsanschluss zum Empfangen eines Vorratsdrucks, einem Bremssteuerdruckanschluss zum Empfangen eines Bremssteuerdrucks wenigsten einem ersten Betriebsbremsanschluss zum Aussteuern eines Betriebsbremsdrucks, einem Relaisventil mit einem mit dem Vorratsanschluss verbundenen Relaisventil-Vorratsanschluss, einem mit dem ersten Betriebsbremsanschluss verbundenen Relaisventil-Arbeitsanschluss, einem Relaisventil-Entlüftungsanschluss und einem Relaisventil-Steueranschluss, und einer mit dem Vorratsanschluss verbundenen elektropneumatischen Vorsteuereinheit zum Bereitstellen eines Vorsteuerdrucks. Die Erfindung betrifft ferner ein elektronisch steuerbares pneumatisches Bremssystem, ein Nutzfahrzeug und ein Verfahren zur bedarfsweisen Herstellung eines Achsmodulators und eines Anhängersteuermoduls.

In der EP 1 826 085 A2 ist eine Druckluftbremsanlage eines Radfahrzeugs beschrieben, bei der die Steuerventile zur Betätigung der Radbremsen jeder Fahrzeugachse in einem Achsventilmodul zusammengefasst sind. Zumindest das Achsventilmodul der Hinterachse umfasst ein Relaisventil und jeweils ein ABS-Einlassventil sowie ein ABS-Auslassventil für die Radbremszylinder beider Seiten der Hinterachse. Bei moderneren Ausführungen eines derartigen Achsventilmoduls der WABCO GmbH sind sowohl das Relaisventil als auch die ABS-Einlassventile und die ABS-Auslassventile jeder Seite der Fahrzeugachse jeweils als eine Membranventileinheit ausgeführt, wie sie beispielsweise aus der DE 10 2014 012 596 A1 oder der DE 10 2014 012 712 A1 bekannt ist. Jede dieser Membranventileinheiten weist ein Einlassmembranventil und ein Auslassmembranventil auf, bei denen jeweils ein an die jeweilige Membran des betreffenden Membranventils angrenzender Steuerdruckraum über ein zugeordnetes Vorsteuerventil wechselweise mit einem hohen Steuerdruck oder dem Umgebungsdruck beaufschlagbar ist. Die Vorsteuerventile sind als getaktet steuerbare 3/2-Wege-Magnetschaltventile ausgebildet. Bei anliegendem hohem Steuerdruck sind die Membranventile geschlossen. Bei anliegendem Umgebungsdruck sind die Membranventile geöffnet, so dass die Arbeitsdruckausgänge über das jeweilige Einlassmembranventil mit dem betreffenden Arbeitsdruckeingang und über das jeweilige Auslassmembranventil mit einem Entlüftungsausgang verbunden sind.

Die EP 3 112 230 A1 betrifft ein Feststellbremsmodul einer Feststellbremseinrichtung, eine Bremsanlage mit einer Feststellbremseinrichtung, ein Fahrzeug, insbesondere Nutzfahrzeug, sowie ein Verfahren zum Betreiben einer Feststellbremseinrichtung.

Die DE 10 2015 011 296 A1 betrifft ein elektronisch steuerbares Bremssystem in einem Nutzfahrzeug, insbesondere in einem autonom steuerbaren Nutzfahrzeug, sowie ein Verfahren zum elektronischen Steuern eines pneumatischen Bremssystems.

DE 10 2015 001 628 A1 betrifft ein Verfahren zum Einstellen von Bremsdrücken eines Kraftfahrzeugs sowie eine Bremsanlage zur Durchführung des Verfahrens zum Einstellen des Bremsdrucks sowie ein Kraftfahrzeug mit einer solchen Bremsanlage zur Durchführung des Verfahrens.

Um unabhängig von der Betätigung eines Bremspedals durch den Fahrer und der ABS-Steuerung der Radbremsen über die ABS-Einlassventile und die ABS-Auslassventile eine Betätigung der Radbremsen im Rahmen von Fahrsicherheitsfunktionen, wie einer Antriebsschlupfregelung (ASR) beziehungsweise einer automatischen Traktionskontrolle (ATC), einer Kippstabilitätskontrolle (RSC), einer elektronischen Stabilitätskontrolle (ESC) beziehungsweise einem elektronischen Stabilitätsprogramm (ESP) und einer externen Verzögerungsanforderung (XBR), zu ermöglichen, ist dem Steuerdruckeingang des Relaisventils ein Umschaltventil vorgeschaltet, mittels dem dieser wechselweise mit einer einen Bremsdruck führenden Bremsdruckleitung oder mit einer einen Vorratsdruck führenden Vorratsdruckleitung verbindbar ist. Der Bremsdruck wird üblicherweise durch die Betätigung eines Bremspedals über ein mit diesem mechanisch verbundenen Bremspedalventil eingestellt, er kann jedoch bei der Verwendung eines sogenannten elektronischen Bremspedals als Bremswertgeber auch mittels eines elektropneumatischen Bremsventils eingestellt werden. Der Vorratsdruck wird üblicherweise von einer Druckluftversorgungsanlage bereitgestellt und bildet den maximal verfügbaren Bremsdruck.

Aufgrund von Bauteiltoleranzen bei den ABS-Ventilen und deren Vorsteuerventilen kann es bei bestimmten Funktionen, bei denen die Bremskraft auf beiden Seiten der Fahrzeugachse gleich groß sein soll, wie bei einer elektronischen Bremskraftbegrenzung (EBL) und einer automatischen Notbremsung durch den Bremsassistenten eines Abstandsgeschwindigkeitsregelsystems (ACC), zu unterschiedlich hohen Bremsdrücken in den Radbremszylindern beider Seiten der Fahrzeugachse und damit zur Destabilisierung des Radfahrzeugs kommen.

Aufgabe der vorliegenden Erfindung ist es, ein Relaisventilmodul der eingangs genannten Art bereitzustellen, welches kostengünstig herzustellen ist, möglichst viele Gleichteile verwendet, variabel einsetzbar ist und insbesondere auch eine verbesserte Übergabe zwischen einer pneumatischen und elektronischen Aussteuerung von Bremsdrücken erlaubt.

Die Erfindung löst die Aufgabe bei einem Relaisventilmodul der eingangs genannten Art durch ein Wechselventil, mit einem ersten Wechselventileingang, einem zweiten Wechselventileingang und einem Wechselventilausgang, wobei der erste Wechselventileingang mit dem Bremsdruckanschluss zum Empfangen des Bremssteuerdrucks, der zweite Wechselventileingang mit der Vorsteuereinheit zum Empfangen des Vorsteuerdrucks und der Wechselventilausgang mit dem Relaisventilsteueranschluss zum Aussteuern des jeweils höheren des Bremssteuerdrucks oder des Vorsteuerdrucks an dem Relaisventilsteueranschluss verbunden ist, wobei die Vorsteuereinheit ein elektrisch schaltbares Einlassventil und ein elektrisch schaltbares Auslassventil aufweist. Auf diese Weise lässt sich jeweils der höhere des Bremssteuerdrucks und des Vorsteuerdrucks an dem Relaisventilsteueranschluss aussteuern. Der Bremssteuerdruck kann beispielsweise von einem pneumatischen Bremswertgeber oder einer anderen Achse des Fahrzeugs stammen und somit einen Bremswunsch repräsentieren. Der Vorsteuerdruck wird mittels der elektropneumatischen Vorsteuereinheit elektrisch ausgesteuert. Diese kann beispielsweise von einer in dem Relaisventilmodul vorgesehenen elektronischen Steuerung oder von einem anderen neben- oder übergeordneten Modul gesteuert werden. Mittels der elektropneumatischen Vorsteuereinheit kann also eine elektronische Bremsvorgabe in den Betriebsbremsdruck umgesetzt werden. Der Betriebsbremsdruck kann dann beispielsweise Radbremsen eines Zugfahrzeugs zugeführt werden oder auch über einen Anhängersteueranschluss (gelben Kupplungskopf in Europa; glad hand BLUE in Nordamerika) für einen Anhänger bereitgestellt werden. Insofern ist das Relaisventilmodul gemäß der vorliegenden Erfindung vielseitig einsetzbar, insbesondere in Achsmodulatoren, Vorderachs- und Hinterachsmodulatoren, als auch in Anhängersteuermodulen.

Es kann vorgesehen sein, dass der Bremssteuerdruck an dem Bremssteuerdruckanschluss nur in einem Redundanzfall ausgesteuert wird, um beispielsweise ein nicht mehr funktionsfähiges anderes Modul oder einen Fehler in der elektropneumatischen Vorsteuereinheit auszugleichen. Es kann aber auch vorgesehen sein, dass der Bremssteuerdruckanschluss für den üblichen Betrieb und zur pneumatischen Aussteuerung des Betriebsbremsdrucks verwendet wird.

Indem das Relaisventilmodul in vielfältiger Weise für elektropneumatische Anwendungen innerhalb eines elektronisch steuerbaren pneumatischen Bremssystems eingesetzt werden kann, können Gleichteile verwendet werden, wodurch die Logistik vereinfacht ist und auch Herstellungskosten reduziert werden können.

In einer ersten bevorzugten Ausführungsform ist vorgesehen, dass das Relaisventilmodul einen Drucksensor zum Erfassen des Betriebsbremsdrucks und Bereitstellen eines entsprechenden Bremsdrucksignals umfasst. Sofern das Relaisventilmodul eine eigene Steuereinheit aufweist, stellt der Drucksensor das Bremsdrucksignal vorzugsweise an dieser bereit. Anderenfalls weist das Relaisventilmodul vorzugsweise eine Drucksensorschnittstelle auf, über die das Bremsdrucksignal an eine weitere neben- oder übergeordnete elektronische Steuereinheit weitergegeben werden kann. Auf diese Weise lässt sich eine vollständige Closed-Loop-Regelung des Bremsdrucks erzeugen, insbesondere, wenn der Betriebsbremsdruck mittels der elektropneumatischen Vorsteuereinheit ausgesteuert wird. Es ist auch möglich, wenn beispielsweise im Normalbetrieb eine pneumatische Aussteuerung mittels des Bremssteuerdrucks vorgesehen ist, zusätzlich mittels der elektropneumatischen Vorsteuereinheit einen Vorsteuerdruck auszusteuern, der höher ist als der Bremssteuerdruck, wenn mittels des Drucksensors erfasst wird, dass der pneumatisch ausgesteuerte Betriebsbremsdruck zu gering ist. Auf diese Weise kann auch die Sicherheit erhöht werden.

Erfindungsgemäß weist die Vorsteuereinheit ein elektrisch schaltbares Einlassventil und ein elektrisch schaltbares Auslassventil auf. Wenigstens eines dieser beiden Ventile ist als normal offenes Ventil vorgesehen, um den Aufbau von Drücken innerhalb des Systems zu vermeiden. Vorzugsweise sind beide Ventile jeweils als 3/2-Wege-Ventile ausgebildet. Hierdurch ist weiter möglich, dass Gleichteile verwendet werden. In ihrer Bauart sind Einlassventil und Auslassventil identisch, sodass für diese das gleiche Ventil verwendet werden kann. Ihre Funktionalität ergibt sich dann aus der Ansteuerung bzw. der Verkabelung, um diese als Einlass- bzw. Auslassventile zu verwenden.

Dementsprechend ist in einer Ausführungsform vorgesehen, dass das Einlassventil einen mit dem Vorratsanschluss verbundenen ersten Einlassventilanschluss, einen mit einer zum zweiten Wechselventilanschluss führenden Vorsteuerdruckleitung verbundenen oder verbindbaren zweiten Einlassventilanschluss und einen dritten Einlassventilanschluss aufweist. Der Begriff "verbunden" oder "verbindbar" bedeutet, dass eine direkte Verbindung zwischen der Vorsteuerdruckleitung und dem zweiten Einlassventilanschluss nicht notwendig ist. Hier kann vorgesehen sein, dass ein weiteres Ventil zwischengeschaltet ist. Der dritte Einlassventilanschluss kann geschlossen oder auch mit einer Entlüftung bzw. Drucksenke verbunden sein. Vorzugsweise ist das Einlassventil stromlos in einer ersten Schaltstellung, in der der dritte Einlassventilanschluss mit dem zweiten Einlassventilanschluss verbunden ist und kann durch Bestromen in eine zweite Schaltstellung versetzt werden, in der der erste Einlassventilanschluss mit dem zweiten Einlassventilanschluss verbunden ist, sodass in diesem Fall dann der Vorratsdruck durch das Einlassventil hindurchgesteuert und vorzugsweise als Vorsteuerdruck an dem zweiten Einlassventilanschluss bereitgestellt wird. Dieser Vorsteuerdruck wird dann über die Vorsteuerdruckleitung einem zweiten Wechselventilanschluss bereitgestellt und kann, sofern dieser den Bremssteuerdruck überschreitet, an dem Wechselventilausgang ausgesteuert werden.

In dieser Ausführungsform ist vorzugsweise ferner vorgesehen, dass das Auslassventil einen mit einer Entlüftung verbundenen ersten Auslassventilanschluss, einen mit der Vorsteuerdruckleitung verbundenen zweiten Auslassventilanschluss und einen dritten Auslassventilanschluss aufweist. Das Auslassventil dient in erster Linie dazu, die Vorsteuerdruckleitung und damit den zweiten Wechselventilanschluss zu entlüften. Dementsprechend ist das Auslassventil vorzugsweise stromlos in einer ersten Schaltstellung, in der der erste Auslassventilanschluss mit dem zweiten Auslassventilanschluss verbunden ist. Bestromt kann das Auslassventil dann in eine zweite Schaltstellung verbracht werden, in der der dritte Auslassventilanschluss mit dem zweiten Auslassventilanschluss verbunden ist. Der dritte Auslassventilanschluss kann in einer Ausführungsform wiederum geschlossen sein. Es soll verstanden werden, dass das Auslassventil ebenso auch als 2/2-Wege-Ventil ausgebildet sein kann, wenn der dritte Auslassventilanschluss geschlossen ist. Das Gleiche gilt auch für das Einlassventil.

In einer Variante sind der dritte Einlassventilanschluss und der dritte Auslassventilanschluss miteinander verbunden. Auf diese Weise sind vorzugsweise stromlos sowohl der zweite als auch der dritte Einlassventilanschluss entlüftet und ein ungewünschter Druckaufbau in abgeschlossenen Bereichen wird vermieden. Weiterhin kann auf diese Weise ein Vorsteuerdruck eingeschlossen werden, wenn der zweite und dritte Einlassventilanschluss und der zweite und dritte Auslassventilanschluss miteinander verbunden sind. Dies kann insbesondere dann vorteilhaft sein, wenn ABS-Funktionalitäten umgesetzt werden und eine weitere Entlüftung von einzelnen Radbremsen, an die der Betriebsbremsdruck ausgesteuert werden soll, auch über die ABS-Ventile bzw. -Module erfolgen kann.

In einer Variante weist das Auslassventil einen mit dem zweiten Einlassventilanschluss verbundenen ersten Auslassventilanschluss, einen mit der Vorsteuerdruckleitung verbundenen zweiten Auslassventilanschluss und einen dritten Auslassventilanschluss auf. Der dritte Auslassventilanschluss ist vorzugsweise wiederum geschlossen. Der erste Auslassventilanschluss ist in dieser Ausführungsform folglich über die Vorsteuerdruckleitung mit dem zweiten Einlassventilanschluss verbunden. Das heißt, das Einlassventil steuert den Vorsteuerdruck durch das Auslassventil hindurch an dem Wechselventil aus. Hierdurch kann insgesamt pneumatische Verbindung eingespart werden.

In einer Weiterbildung bzw. einem zweiten Aspekt der Erfindung wird das Relaisventilmodul nach einer der vorstehend beschriebenen bevorzugten Ausführungsformen eines Relaisventilmoduls gemäß dem ersten Aspekt der Erfindung als Achsmodulator, insbesondere Vorderachsmodulator, verwendet. Dabei ist der erste Betriebsbremsanschluss für eine erste Fahrzeugseite vorgesehen, und das Relaisventilmodul weist ferner einen mit dem Relaisventilarbeitsanschluss verbundenen zweiten Betriebsbremsanschluss zum Aussteuern des Betriebsbremsdrucks für eine zweite Fahrzeugseite auf. Das Relaisventilmodul weist folglich einen ersten und einen zweiten Betriebsbremsanschluss auf, an dem jeweils derselbe Betriebsbremsdruck ausgesteuert wird. Der Achsmodulator gemäß dieser Ausführungsform lässt sich sowohl als Vorderachs- als auch als Hinterachsmodulator einsetzen. Beispielsweise ist der erste Betriebsbremsanschluss für die linke Fahrzeugseite und der zweite Betriebsbremsanschluss für die rechte Fahrzeugseite vorgesehen. Soll zusätzlich eine radindividuelle Bremsung erreicht werden, können ABS-Module hinter die entsprechenden ersten und zweiten Betriebsbremsanschlüsse geschaltet werden. Das Relaisventilmodul dieser Ausführungsform kann auch in ein größeres Modul integriert sein, sodass einzelne Bauteile von dem Relaisventilmodul Teil einer übergeordneten Einheit werden.

Gemäß einer weiter bevorzugten Ausführungsform des als Achsmodulator verwendeten Relaisventilmoduls weist dieses integrierte ABS-Einheiten bzw. angeflanschte ABS-Module auf. Dementsprechend ist vorgesehen, dass das Relaisventilmodul ein erstes ABS-Einlassventil, ein zweites ABS-Einlassventil, ein erstes ABS-Auslassventil und ein zweites ABS-Auslassventil für mindestens einen Radbremszylinder an jeder Seite der Fahrzeugachse aufweist. Diese sind jeweils als ein druckgesteuertes Membranventil mit einem zugeordneten Vorsteuerventil ausgebildet, wobei diese Vorsteuerventile als getaktet steuerbare 3/2-Wege-Ventile ausgeführt sind, über die jeweils ein Steuerdruckraum des zugeordneten Membranventils wechselweise mit Betriebsbremsdruck bzw. mit an dem Relaisventilsteueranschluss des Relaisventils abgegriffenem Steuerdruck oder mit dem Umgebungsdruck beaufschlagbar ist. Indem die Vorsteuerventile wiederum als 3/2-Wege-Ventile ausgebildet sind, können weiter Gleichteile verwendet werden. Die ABS-Einlass und -Auslassventile können mit den anderen Elementen des Relaisventilmoduls in ein gemeinsames Gehäuse integriert sein.

Gemäß einer weiteren bevorzugten Ausführungsform bzw. einem dritten Aspekt der Erfindung wird ein Relaisventilmodul nach einer der vorstehend beschriebenen bevorzugten Ausführungsformen eines Relaisventilmoduls gemäß dem ersten Aspekt der Erfindung als Anhängersteuermodul verwendet, wobei der erste Betriebsbremsanschluss zur Verbindung mit einem Anhängersteueranschluss (gelber Kupplungskopf) ausgebildet ist, und das Relaisventilmodul ferner einen Anhängerversorgungsanschluss aufweist, der zur Verbindung mit einem Anhängerversorgungsdruckanschluss (roter Kupplungskopf) vorgesehen ist zum Versorgen eines Anhängers mit Vorratsdruck. Anhängersteuermodule versorgen den Anhänger (gelben und roten Kupplungskopf) in der Regel einerseits mit einem Vorratsdruck, andererseits mit einem Steuerdruck, der einen Bremswunsch darstellt. Über den Betriebsbremsanschluss wird in diesem Ausführungsbeispiel der Steuerdruck an den Anhänger übergeben, während das Relaisventilmodul ferner einen Anhängerversorgungsanschluss aufweist, an dem Vorratsdruck für den Anhänger bereitgestellt wird. Der Vorratsdruck kann von dem Relaisventilmodul einfach durchgesteuert werden von dem Vorratsanschluss.

Es kann aber auch vorgesehen sein, dass an dem Anhängerversorgungsanschluss ein Schnellentlüftungsventil angeschlossen ist, insbesondere unmittelbar an das Relaisventilmodul angeflanscht ist. Ein solches Schnellentlüftungsventil kann, insbesondere in nordamerikanischen Varianten, das im System befindliche Volumen schnell und geräuscharm entlüften, wenn der Anhänger beispielsweise geparkt werden soll.

Weiterhin kann bevorzugt sein, dass an den Bremsdruckanschluss ein weiteres Wechselventil angeschlossen ist, welches jeweils den höheren des Bremssteuerdrucks und eines Streckbremsdrucks an dem Bremssteuerdruckanschluss aussteuert. Dies ist besonders dann bevorzugt, wenn das Bremssystem, in welchem das Relaisventilmodul als Anhängersteuermodul eingebaut wird, über eine Streckbremsfunktionalität verfügt. Der von der Streckbremsfunktionalität bereitgestellte Steuerdruck, nämlich der Streckbremsdruck, kann dann an dem Wechselventil bereitgestellt werden und anstelle des Bremssteuerdrucks an dem Bremssteuerdruckanschluss ausgesteuert werden, sodass in entsprechender Weise ein Betriebsbremsdruck für den Anhänger ausgesteuert wird. In einer Variante mit einem elektrischen Streckbremse ist es bevorzugt, die entsprechende elektrische Streckbremsanforderung mittels der Einlass- und Auslassventile der Vorsteuereinheit elektrisch auszuregeln. In diesem Fall kann dann das weitere Wechselventil entfallen.

In einem vierten Aspekt wird die eingangs genannte Aufgabe durch ein elektronisch steuerbares pneumatisches Bremssystem gelöst, mit einem Relaisventilmodul, welches als Vorderachsmodulator eingesetzt wird, und einem Relaisventilmodul, welches als Anhängersteuermodul eingesetzt wird, sowie einem Bremswertgeber mit wenigstens einem pneumatischen Bremswertgeberanschluss und einem elektrischen Bremswertgeberanschluss, einem Zentralmodul und einem Hinterachsmodulator, wobei der pneumatische Bremswertgeberanschluss mit dem Bremssteuerdruckanschluss des Vorderachsmodulators und/oder dem Bremssteuerdruckanschluss des Anhängersteuermoduls verbunden ist, und der elektrische Bremswertgeberanschluss mit dem Zentralmodul verbunden ist. Ein solches Bremssystem lässt einerseits eine rein elektronische Aussteuerung von Bremsdrücken zu, nämlich indem der elektronische Bremswertgeberanschluss mit dem Zentralmodul verbunden ist. Das Zentralmodul kann dann entsprechende Signale an den Vorderachsmodulator, den Hinterachsmodulator und das Anhängersteuermodul weitergeben, um eine entsprechende elektrische Aussteuerung von Bremsdrücken zu bewirken. Alternativ oder nur für einen Redundanzfall lassen aber der Vorderachsmodulator und das Anhängersteuermodul auch eine rein pneumatische Aussteuerung von Bremsdrücken zu, nämlich indem der von dem Bremswertgeber pneumatisch ausgesteuerte Bremswunsch an dem Bremssteuerdruckanschluss des Vorderachsmodulators und des Anhängersteuermoduls ausgesteuert wird und dann über die entsprechenden Wechselventile den elektrisch ausgesteuerten Druck ersetzen kann, falls der an dem Bremssteuerdruckanschluss ausgesteuerte Bremsdruck höher ist. Da der Vorderachsmodulator und das Anhängersteuermodul fast baugleich sind, kann eine Vielzahl von Gleichteilen verwendet werden, und das Bremssystem insgesamt kann kostengünstiger hergestellt werden.

Es soll verstanden werden, dass das Relaisventilmodul gemäß dem ersten, zweiten und dritten Aspekt sowie das elektronisch steuerbare pneumatische Bremssystem gemäß dem vierten Aspekt der Erfindung gleiche und ähnliche Unteraspekte aufweisen, wie sie insbesondere in den abhängigen Ansprüchen niedergelegt sind. Insofern wird für besondere Ausführungsformen des Bremssystems auch auf die vorherigen Ausführungsformen des Relaisventilmoduls verwiesen.

In einem fünften Aspekt wird die eingangs genannte Aufgabe gelöst durch ein Verfahren zum bedarfsweisen Herstellen eines Achsmodulators und eines Anhängersteuermoduls, mit den Schritten: Bereitstellen und Herstellen des Relaisventilmoduls nach einer der vorstehend beschriebenen bevorzugten Ausführungsformen eines Relaisventilmodus gemäß dem ersten Aspekt der Erfindung; und bedarfsweises Vorsehen oder Freigeben eines zweiten Betriebsbremsanschlusses zum Aussteuern des Betriebsbremsdrucks für eine zweite Fahrzeugseite zum Herstellen des Achsmodulators; oder bedarfsweises Vorsehen oder Freigeben eines Anhängerversorgungsanschlusses, der zur Verbindung mit einem Anhängerversorgungsdruckanschluss (roter Kupplungskopf) vorgesehen ist zum Versorgen eines Anhängers mit Vorratsdruck zum Herstellen des Anhängersteuermoduls. Gemäß diesem Verfahren kann aus demselben Halbzeug, nämlich dem Relaisventilmodul gemäß dem ersten Aspekt der Erfindung, sowohl ein Achsmodulator als auch ein Anhängersteuermodul durch einfaches Vorsehen bzw. Freigeben von Anschlüssen gebildet werden. Es kann vorgesehen sein, dass das Relaisventilmodul gemäß dem ersten Aspekt der Erfindung sowohl über einen zweiten Betriebsbremsanschluss als auch über einen Anhängerversorgungsanschluss verfügt, die dann aber zur Herstellung des jeweiligen Moduls, des Achsmodulators oder Anhängersteuermoduls, lediglich freigegeben werden, beispielsweise durch Entfernen entsprechender Stopfen. Auf diese Weise ist die Herstellung eines Achsmodulators und eines Anhängersteuermoduls besonders einfach möglich und kann bedarfsweise erfolgen.

In einem sechsten Aspekt löst die Erfindung die eingangs genannte Aufgabe durch ein Nutzfahrzeug mit einem elektronisch steuerbaren pneumatischen Bremssystem der vorstehend genannten Art.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine schematische Ansicht eines Relaisventilmoduls, insbesondere Achsmodulator, in einem ersten Ausführungsbeispiel;
- Figur 2: ein zweites Ausführungsbeispiel eines Relaisventilmoduls, insbesondere Anhängersteuermodul;
- Figur 3: ein drittes Ausführungsbeispiel eines Relaisventilmoduls, insbesondere Achsmodulator;
- Figur 4: ein viertes Ausführungsbeispiel eines Relaisventilmoduls, insbesondere Achsmodulator; und
- Figur 5: eine schematische Darstellung eines elektronisch steuerbaren pneumatischen Bremssystems.

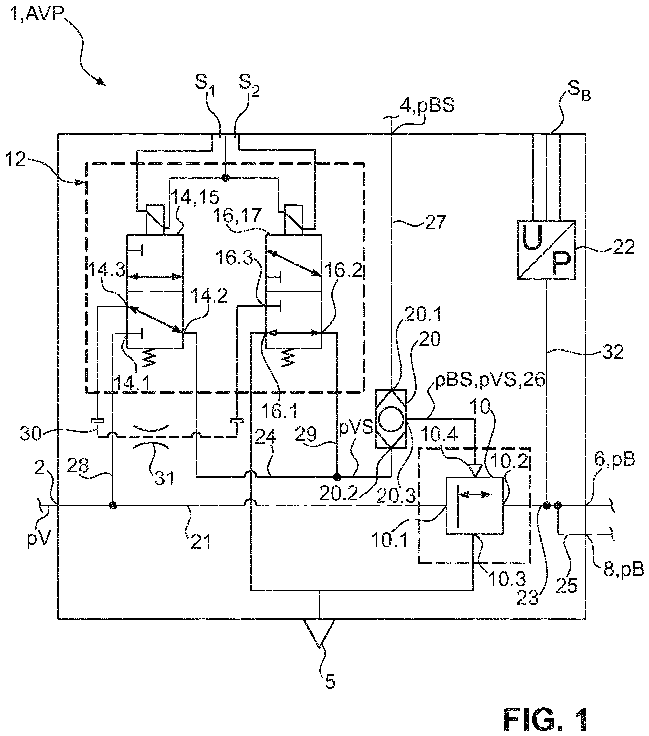

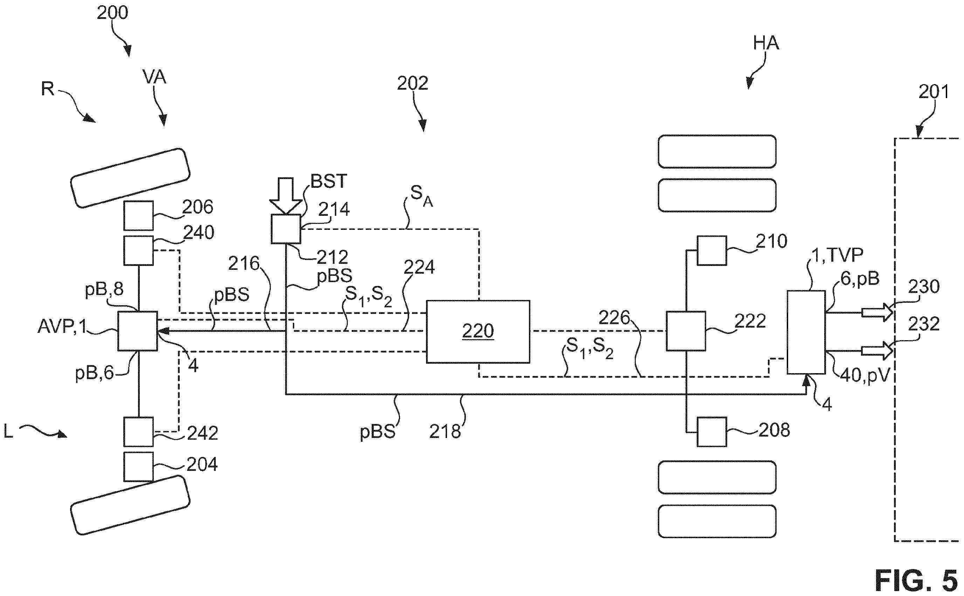

Ein Relaisventilmodul 1 weist in einem ersten Ausführungsbeispiel (Figur 1) einen Vorratsanschluss 2 zum Empfang von Vorratsdruck pV auf. Der Vorratsdruck pV kann aus einem Druckluftvorrat, beispielsweise dem ersten, zweiten oder dritten Druckluftvorrat, stammen, je nachdem, wie das Relaisventilmodul 1 eingesetzt wird. Es kann auch vorgesehen sein, dass zwei Druckluftvorräte über ein Select-High-Ventil an den Vorratsanschluss 2 angeschlossen sind. Ferner weist das Relaisventilmodul 1 einen Bremssteuerdruckanschluss 4 zum Empfangen eines Bremssteuerdrucks pBS auf. Der Bremssteuerdruck pBS ist ein Druck, der einen Bremswunsch angibt, also vorzugsweise ein von einem wenigstens teilweise pneumatischen Bremswertgeber BST ausgesteuerter Druck, oder der Druck einer weiteren Achse, wenn diese beispielsweise im Redundanzfall mittels des Relaisventilmoduls 1 ausgesteuert werden soll. Weiterhin weist das Relaisventilmodul 1 einen ersten Betriebsbremsanschluss 6 zum Aussteuern des Betriebsbremsdrucks pB auf. In der in Figur 1 dargestellten Ausführungsform ist das Relaisventilmodul 1 als Achsmodulator AVP ausgebildet und weist dementsprechend auch einen zweiten Betriebsbremsanschluss 8 auf, an dem ebenfalls der Betriebsbremsdruck pB ausgesteuert wird. Sowohl an dem ersten als auch an dem zweiten Betriebsbremsanschluss 6, 8 wird derselbe Betriebsbremsdruck pB ausgesteuert, der dann an linke und rechte Radbremsen 204, 206 beispielsweise an der Vorderachse VA (vgl. Figur 5) ausgesteuert werden kann.

Sowohl der erste als auch der zweite Betriebsbremsanschluss 6, 8 werden von einem Relaisventil 10 versorgt, welches dazu dient, den Bremssteuerdruck pBS oder einen Vorsteuerdruck pVS volumenzuverstärken und an dem ersten Betriebsbremsanschluss 6 und in diesem Ausführungsbeispiel auch dem zweiten Betriebsbremsanschluss 8 auszusteuern. Der Vorsteuerdruck pVS wird von einer Vorsteuereinheit 12 ausgesteuert, die ihrerseits mit dem Vorratsanschluss 2 verbunden ist.

Die Vorsteuereinheit 12 wird elektrisch mittels eines ersten und eines zweiten Schaltsignals S1, S2 gesteuert, die beispielsweise von einer für das Relaisventilmodul 1 vorgesehenen elektronischen Steuereinheit (nicht gezeigt) vorgegeben werden können, oder auch direkt von einem übergeordneten Modul, wie beispielsweise einem Zentralmodul 220 (vgl. Figur 5), vorgegeben werden können. Genauer weist die Vorsteuereinheit 12 in diesem Ausführungsbeispiel ein Einlassventil 14 und ein Auslassventil 16 auf, wobei das Einlassventil 14 als 3/2-Wege-Ventil 15 und das Auslassventil 16 als 3/2-Wege-Ventil 17 ausgebildet ist. Das Einlassventil 14 lässt sich elektrisch durch das erste Schaltsignal S1 steuern, und das Auslassventil 16 lässt sich elektrisch durch das zweite Schaltsignal S2 steuern. Durch entsprechende Schaltung der Einlass- und Auslassventile 14, 16 kann der Vorsteuerdruck pVS ausgesteuert werden.

Um, je nachdem, welcher von beiden Steuerdrücken, Bremssteuerdruck pBS oder Vorsteuerdruck pVS, höher ist, an dem Relaisventil 10 auszusteuern, ist ein Wechselventil 20 vorgesehen. Das Wechselventil 20 weist einen ersten Wechselventileingang 20.1 auf, an dem der Bremssteuerdruck pBS ausgesteuert wird. Das Wechselventil 20 weist ferner einen zweiten Wechselventileingang 20.2 auf, an dem der Vorsteuerdruck pVS ausgesteuert wird. Das Wechselventil 20 ist als Select-High-Ventil ausgebildet, sodass jeweils der höhere des am ersten und zweiten Wechselventileingang 20.1, 20.2 anliegenden Druck an den Wechselventilausgang 20.3 weitergeleitet wird. Der Wechselventilausgang 20.3 ist dann mit dem Relaisventil 10 verbunden, welches den von dem Wechselventil 20 empfangenen Druck pBS, pVS volumenverstärkt an dem ersten Betriebsbremsanschluss 6 und gegebenenfalls an dem zweiten Betriebsbremsanschluss 8 bereitstellt.

Im Einzelnen weist das Relaisventil 10 einen Relaisventilvorratsanschluss 10.1 auf, der über eine erste Vorratsleitung 21 mit dem Vorratsanschluss 2 verbunden ist. Ferner weist das Relaisventil 10 einen Relaisventilarbeitsanschluss 10.2 auf, der an eine erste Betriebsbremsleitung 23 angeschlossen ist, von der eine zweite Betriebsbremsleitung 25 abzweigt. Die erste Betriebsbremsleitung 23 verbindet den Relaisventilarbeitsanschluss 10.2 mit dem ersten Betriebsbremsanschluss 6, und die zweite Betriebsbremsleitung 25 verbindet die erste Betriebsbremsleitung 23 mit dem zweiten Betriebsbremsanschluss 8. Das Relaisventil 10 weist ferner einen Relaisventilentlüftungsanschluss 10.3 auf, der mit einer Entlüftung 5 verbunden ist. Schließlich weist das Relaisventil 10 einen Relaisventilsteueranschluss 10.4 auf, an dem die Steuerdrücke pBS, pVS ausgesteuert werden. Zu diesem Zweck ist der Relaisventilsteueranschluss 10.4 über eine erste Steuerleitung 26 mit dem Wechselventilausgang 20.3 verbunden. Der erste Wechselventileingang 20.1 ist über eine Bremssteuerleitung 27 mit dem Bremssteuerdruckanschluss 4 verbunden, kann aber auch direkt mit dem Bremssteuerdruckanschluss 4 verbunden sein. Der zweite Wechselventileingang 20.2 ist mit einer Vorsteuerdruckleitung 24 verbunden, in die von der Vorsteuereinheit 12 der Vorsteuerdruck pVS ausgesteuert wird.

Das Einlassventil 14 der Vorsteuereinheit 12 weist gemäß diesem Ausführungsbeispiel einen ersten Einlassventilanschluss 14.1, einen zweiten Einlassventilanschluss 14.2 und einen dritten Einlassventilanschluss 14.3 auf. Der erste Einlassventilanschluss 14.1 ist mit einer Vorratsabzweigleitung 28 verbunden, die von der ersten Vorratsleitung 21 abzweigt und den Vorratsdruck pV an dem ersten Einlassventilanschluss 14.1 bereitstellt. Der zweite Einlassventilanschluss 14.2 ist mit der Vorsteuerdruckleitung 24 verbunden. Der dritte Einlassventilanschluss 14.3 ist in diesem Ausführungsbeispiel geschlossen. Das Einlassventil 14 weist eine erste in Figur 1 gezeigte Schaltstellung auf, in der der zweite Einlassventilanschluss 14.2 mit dem dritten Einlassventilanschluss 14.3 verbunden ist. In dieser Schaltstellung wird kein Vorsteuerdruck pVS ausgesteuert. Durch Bereitstellen des ersten Schaltsignals S1 lässt sich das Einlassventil 14 in die zweite in Figur 1 nicht gezeigte Schaltstellung schalten, in der der erste Einlassventilanschluss 14.1 mit dem zweiten Einlassventilanschluss 14.2 verbunden ist, sodass der Vorsteuerdruck pV durch das Einlassventil 14 durchgesteuert und als Vorsteuerdruck pVS in der Vorsteuerdruckleitung 24 bereitgestellt wird. Der Vorsteuerdruck pVS liegt dann an dem zweiten Wechselventileingang 20.2 an. Ist der Vorsteuerdruck pVS höher als der Bremssteuerdruck pBS, schaltet das Wechselventil 20 und steuert den Vorsteuerdruck pVS von dem zweiten Wechselventileingang 20.2 an den Wechselventilausgang 20.3 weiter, sodass dieser Druck dann an dem Relaisventilsteueranschluss 10.4 anliegt, welches diesen dann volumenverstärkt an den ersten und zweiten Betriebsbremsanschlüssen 6, 8 bereitstellt.

Zum Entlüften der Vorsteuerdruckleitung 24 und des zweiten Wechselventileingangs 20.2 ist das Auslassventil 16 vorgesehen. Dieses weist einen ersten Auslassventilanschluss 16.1, einen zweiten Auslassventilanschluss 16.2 und einen dritten Auslassventilanschluss 16.3 auf. Der erste Auslassventilanschluss 16.1 ist mit der Entlüftung 5 verbunden. An diesem liegt also Umgebungsdruck an. Der zweite Auslassventilanschluss 16.2 ist über eine erste Entlüftungsleitung 29 mit der Vorsteuerdruckleitung 24 verbunden. Der dritte Auslassventilanschluss 16.3 ist wiederum geschlossen. Das Auslassventil 16 weist eine erste in Figur 1 gezeigte stromlose Schaltstellung auf, in der der zweite Auslassventilanschluss 16.2 mit dem ersten Auslassventilanschluss 16.1 verbunden ist und somit die Vorsteuerdruckleitung 24 entlüftet ist. Wird allerdings ein Vorsteuerdruck pVS von dem Einlassventil 14 bereitgestellt, ist es bevorzugt, das Auslassventil 16 zu schließen, das heißt in die zweite in Figur 1 nicht gezeigte Schaltstellung zu verbringen, und zwar durch Bereitstellen des zweiten Schaltsignals S2. Dann ist der zweite Auslassventilanschluss 16.2 mit dem dritten Auslassventilanschluss 16.3 verbunden und die erste Entlüftungsleitung 29 geschlossen.

In einer Variante, die ebenfalls in Figur 1 eingezeichnet ist, sind der dritte Einlassventilanschluss 14.3 und der dritte Auslassventilanschluss 16.3 miteinander über eine Verbindungsleitung 30 verbunden. Die Verbindungsleitung 30 ist mit einer Drossel 31 ausgestattet. In der in Figur 1 gezeigten Schaltstellung kann so verhindert werden, dass sich ein Druck aufgrund von Leckagen aufbaut, wenn der dritte Einlassventilanschluss 14.3 direkt und unmittelbar geschlossen ist. Durch die Verbindungsleitung 30 ist hier etwas mehr Raum. Ferner kann, wenn das Auslassventil 16 in die zweite in Figur 1 nicht gezeigte Schaltstellung geschaltet wird, ein Vorsteuerdruck pVS eingesperrt werden und bleibt aufrechterhalten.

Schließlich weist das Relaisventilmodul 1 gemäß dem in Figur 1 gezeigten ersten Ausführungsbeispiel einen Drucksensor 22 auf. Der Drucksensor 22 ist über eine Messleitung 32 mit der ersten Betriebsbremsleitung 23 verbunden und empfängt so den Betriebsbremsdruck pB. Der Drucksensor 22 stellt ein Drucksignal SB bereit, welches entweder direkt in einer nicht gezeigten elektronischen Steuereinheit verarbeitet werden kann oder auch an eine übergeordnete Einheit, wie beispielsweise das Zentralmodul 220 (vgl. Figur 5) weitergeleitet werden kann. Auf diese Weise ist es möglich, eine vollständige Closed-Loop-Regelung umzusetzen, auch wenn der Betriebsbremsdruck pB pneumatisch ausgesteuert wird. Wird beispielsweise mittels des Drucksensors 22 festgestellt, dass der auf Basis des Betriebssteuerdrucks pBS ausgesteuerte Betriebsbremsdruck pB zu gering ist, ist es möglich, mittels der Vorsteuereinheit 12 den Vorsteuerdruck pVS auszusteuern, um einen Betriebsbremsdruck pB zu erreichen, der einem vorgegebenen Sollwert entspricht. Weiterhin ist es durch den Drucksensor 22 vereinfacht, eine Übergabe zwischen einer pneumatischen Aussteuerung des Betriebsbremsdrucks pB und einer elektrischen Aussteuerung des Betriebsbremsdrucks pB zu erreichen. Wird von einer pneumatischen Aussteuerung auf eine elektrische Aussteuerung umgeschaltet, ist aufgrund des Drucksensors 22 bekannt, in welcher Höhe der Betriebsbremsdruck pB ausgesteuert werden muss. Im Vergleich zu einem bisher üblichen ABS-System ermöglicht diese Anordnung das Aussteuern eins präzisen Ausgangsdrucks, welcher bei Seitenweise gleicher Anforderung nicht durch nachgeschaltete ABS-Ventile beeinflusst werden muss. Dies reduziert die Betätigungsanzahl der ABS-Ventile.

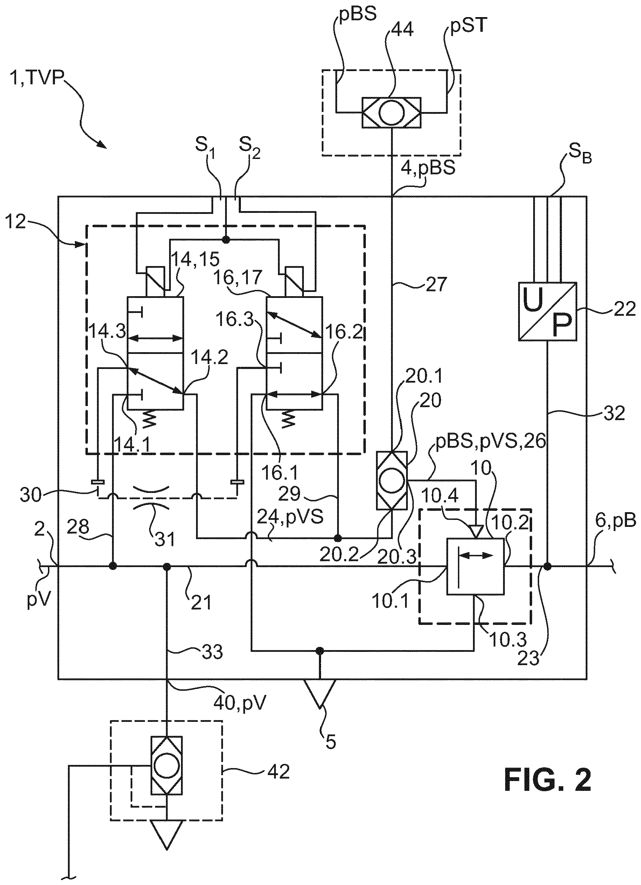

Figur 2 zeigt ein Ausführungsbeispiel, in dem das Relaisventilmodul 1 als Anhängersteuermodul TVP ausgebildet ist. Aus diesem Grund weist es nur einen, nämlich den ersten Betriebsbremsanschluss 6, auf, der dann in diesem Ausführungsbeispiel dazu vorgesehen ist, mit einem Anhängersteueranschluss 230 (vgl. Figur 5) verbunden zu sein. Der Anhängersteueranschluss 230 wird in Europa auch als "gelber Kupplungskopf" bezeichnet; in Nordamerika üblicherweise als "glad hand BLUE", "control line" oder "service line". Zusätzlich weist das Anhängersteuermodul TVP gemäß diesem Ausführungsbeispiel einen Anhängerversorgungsanschluss 40 auf, an dem der Vorratsdruck pV bereitgestellt werden kann. Zu diesem Zweck ist der Anhängerversorgungsanschluss 40 über eine zweite Vorratsabzweigleitung 33 mit der ersten Vorratsleitung 21 verbunden. Zwischen dem Vorratsanschluss 2 und dem Anhängerversorgungsanschluss 40 ist kein Ventil geschaltet, der Vorratsdruck pV wird einfach durchgesteuert. Es kann aber auch vorgesehen sein, dass in dem Relaisventilmodul 1 ein zusätzliches Absperrventil vorgesehen ist. Es soll verstanden werden, dass der Anhängerversorgungsanschluss 40 nicht zwingend notwendig ist, wenn ein Anhänger versorgt werden soll. Es ist ebenso denkbar und bevorzugt, den Vorratsdruck pV für den Anhänger vor dem Vorratsanschluss 2 abzuzweigen, und das Relaisventilmodul 1 zu umgehen. Hierbei können dann der Anhängerversorgungsanschluss 40 und die zweite Vorratsabzweigleitung 33 entfallen.

Gemäß der in Figur 2 gezeigten Ausführungsform ist ein optionales Schnellentlüftungsventil 42 an das Relaisventilmodul 1 angeflanscht, nämlich an dem Anhängerversorgungsanschluss 40. Der Anhängerversorgungsanschluss 40 ist über das Schnellentlüftungsventil 42 mit einem Anhängerversorgungsdruckanschluss 232 verbindbar, der in Europa auch als "roter Kupplungskopf" bezeichnet wird; in Nordamerika entsprechend "glad hand RED", "supply line" oder "emergency line". Über diesen Anhängerversorgungsdruckanschluss 232 wird für den Anhänger 201 Versorgungsdruck pV bereitgestellt, während über den Anhängersteueranschluss 230 ein Bremswunsch für den Anhänger 201 bereitgestellt wird (vgl. Figur 5). Das Schnellentlüftungsventil 42 dient zur Schnellentlüftung des Volumens im System. Es ist in bekannter Weise ausgebildet.

Weiterhin ist in Figur 2 zu sehen, dass an dem Bremssteuerdruckanschluss 4 vorgeschaltet ein weiteres Wechselventil 44 vorgesehen ist. Das weitere Wechselventil 44 dient dazu, den höheren des Betriebssteuerdrucks pBS und eines Streckbremsdrucks pST, der von einer Streckbremsfunktionalität bereitgestellt wird, an dem Bremssteuerdruckanschluss 4 auszusteuern. Eine Streckbremsfunktionalität kann in bekannter Weise ausgebildet sein.

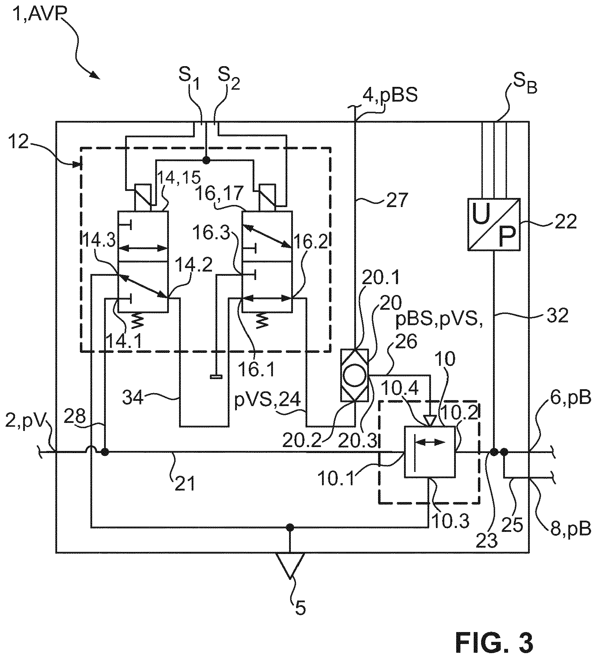

Gemäß Figur 3 ist ein zweites Ausführungsbeispiel eines als Achsmodulator AVP verwendeten Relaisventilmoduls 1 dargestellt. Das in Figur 3 gezeigte Ausführungsbeispiel basiert grundsätzlich auf dem in Figur 1 gezeigten Ausführungsbeispiel, und wiederum sind ein erster und ein zweiter Betriebsbremsanschluss 6, 8 vorgesehen. Im Folgenden werden insbesondere die Unterschiede zum ersten Ausführungsbeispiel hervorgehoben.

Das dritte Ausführungsbeispiel des Relaisventilmoduls (Figur 3) unterscheidet sich vom ersten Ausführungsbeispiel des Relaisventilmoduls 1 (Figur 1) in der Verschaltung der Vorsteuereinheit 12. Genauer gesagt ist in diesem Ausführungsbeispiel (Figur 3) der erste Auslassventilanschluss 16.1 nicht mit der Entlüftung 5 verbunden, sondern direkt mit dem zweiten Einlassventilanschluss 14.2. Zu diesem Zweck ist eine zweite Steuerleitung 34 vorgesehen, die die beiden Anschlüsse miteinander verbindet. Der erste Einlassventilanschluss 14.1 ist wie auch im ersten Ausführungsbeispiel mit der ersten Vorratsabzweigleitung 28 verbunden und empfängt den Vorratsdruck pV. In Abweichung zum ersten Ausführungsbeispiel ist aber der dritte Einlassventilanschluss 14.3 direkt mit einer Entlüftung 5 verbunden. Um die Vorsteuerleitung 24 also zu entlüften, müssen beide, das Einlassventil 14 und das Auslassventil 16, in ihre ersten in Figur 3 gezeigten stromlosen Schaltstellungen gebracht werden. Zum Belüften der Vorsteuerdruckleitung 24 muss allerdings lediglich das Einlassventil 14 in die zweite in Figur 3 nicht gezeigte Schaltstellung gebracht werden. Durch Schalten des Auslassventils 16 lässt sich der Vorsteuerdruck pVS in der Vorsteuerdruckleitung 24 einsperren.

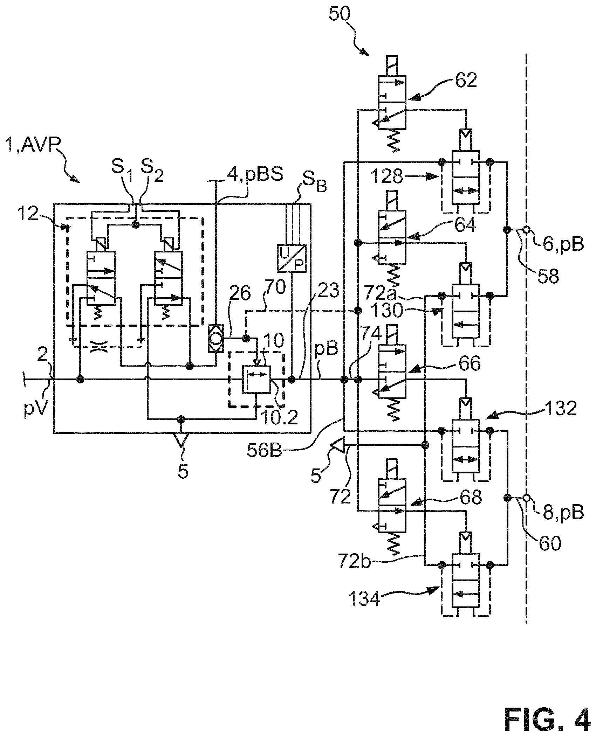

Figur 4 zeigt ein weiteres Ausführungsbeispiel des Relaisventilmoduls 1, wobei in diesem Ausführungsbeispiel (Figur 4) eine ABS-Einheit 50 vorgesehen ist. Die ABS-Einheit 50 kann auch aus zwei ABS-Modulen 240, 242 bestehen, die entsprechenden Radbremsen 204, 206 vorgeschaltet sind. Die ABS-Einheit 50 kann mit dem Relaisventilmodul 1 in ein gemeinsames Gehäuse integriert sein oder an dem Gehäuse des Relaisventilmoduls 1 angeflanscht sein.

Wie sich aus Figur 4 ergibt, ist das Relaisventilmodul 1 grundsätzlich entsprechend dem ersten Ausführungsbeispiel ausgebildet, wobei sich die ABS-Einheit 50 an den Relaisventilarbeitsanschluss 10.2 anschließt. Die erste Betriebsbremsleitung 23 führt also in diesem Ausführungsbeispiel zur ABS-Einheit 50. Die ersten und zweiten Betriebsbremsanschlüsse 6, 8 sind entsprechend stromabwärts der ABS-Einheit 50 angeordnet. Zwischen diese und den Relaisventilarbeitsanschluss 10.2 ist die ABS-Einheit 50 geschaltet.

Die ABS-Einheit 50 umfasst jeweils ein erstes und zweites ABS-Einlassventil 128, 132 sowie jeweils ein erstes und zweites ABS-Auslassventil 130, 134 für mindestens eine Radbremse 206, 204 an jeder Seite der Vorderachse VA. Von der ersten Betriebsbremsleitung 23 zweigen erste und zweite Achsbremsleitungen 56a, 56b ab. Diese sind eingangsseitig an die ersten und zweiten ABS-Einlassventile 128, 132 angeschlossen. Ausgangsseitig ist an den ersten und zweiten ABS-Einlassventilen 128, 132 jeweils eine zu dem jeweiligen ausgangsseitigen Betriebsbremsanschluss 6, 8 führende Radbremsleitung 58, 60 an die ersten und zweiten ABS-Einlassventile 128, 132 angeschlossen. Mittels der ersten und zweiten ABS-Einlassventile 128, 132, die vorliegend als druckgesteuerte 2/2-Wege-Membranventile ausgebildet sind, können die Radbremsleitungen 58, 60 wechselweise mit den jeweiligen ersten bzw. zweiten Achsbremsleitungen 56a, 56b verbunden oder gegenüber diesen abgesperrt werden.

Den ersten und zweiten ABS-Einlassventilen 128, 132 ist jeweils ein als ein getaktet steuerbares 3/2-Wege-Ventil ausgebildetes erstes bzw. zweites Vorsteuerventil 62, 66 zugeordnet. Über diese ersten und zweiten Vorsteuerventile 62, 66 ist der jeweilige Steuerdruckeingang der ABS-Einlassventile 128, 132 wechselweise mit dem Umgebungsdruck oder mit einem über eine verzweigte dritte Steuerleitung 70 an den ersten und zweiten Achsbremsleitungen 56 abgegriffenen Steuerdruck beaufschlagbar. Im unbetätigten, also unbestromten Zustand dieser ersten und zweiten Vorsteuerventile 62, 66 sind die ersten und zweiten ABS-Einlassventile 128, 132 geöffnet, sodass die ersten und zweiten Achsbremsleitungen 56a, 56b mit den Radbremsleitungen 58, 60 verbunden sind, auch wenn die ersten und zweiten ABS-Einlassventile 128, 132 aufgrund ihrer Membranbauweise in Figur 4 geschlossen dargestellt sind. Im betätigten, also bestromten Zustand der ersten und zweiten Vorsteuerventile 62, 66 sind die ersten und zweiten ABS-Einlassventile 128, 132 geschlossen, sodass die ersten und zweiten Radbremsleitungen 58, 60 dann gegenüber den ersten und zweiten Achsbremsleitungen 56a, 56b abgesperrt sind.

Eine zweite Entlüftungsleitung 72 führt zu einer Entlüftung 5. Erste und zweite Zweige 72a, 72b der zweiten Entlüftungsleitung 72 sind eingangsseitig an jeweils ein zugeordnetes erstes und zweites ABS-Auslassventil 130, 134 angeschlossen. Ausgangsseitig ist jeweils die zu dem jeweiligen ausgangsseitigen Betriebsbremsanschluss 6, 8 führende Radbremsleitung 58, 60 an die ABS-Auslassventile 130, 134 angeschlossen. Über die ABS-Auslassventile 130, 134, die jeweils als druckgesteuerte 2/2-Wege-Membranventile ausgebildet sind, können die Radbremsleitungen 58, 60 wechselweise mit dem jeweiligen Zweig 72a, 72b der zweiten Entlüftungsleitung 72 verbunden oder gegenüber dieser abgesperrt werden.

Den ersten und zweiten ABS-Auslassventilen 130, 134 ist jeweils ein als ein getaktet steuerbares 3/2-Wege-Ventil ausgebildetes drittes bzw. viertes Vorsteuerventil 64, 68 zugeordnet. Über diese dritten und vierten Vorsteuerventile 64, 68 ist der jeweilige Steuerdruckeingang der ersten und zweiten ABS-Auslassventile 130, 134 wechselweise mit dem über die verzweigte dritte Steuerleitung 70 an der ersten Steuerleitung 26 abgegriffenen Steuerdruck oder dem Umgebungsdruck beaufschlagbar. Im unbetätigten, also unbestromten Zustand dieser dritten und vierten Vorsteuerventile 64, 68 sind die ersten und zweiten ABS-Auslassventile 130, 134 geschlossen, sodass die Radbremsleitungen 58, 60 gegenüber den Zweigen 72a, 72b der zweiten Entlüftungsleitung 72 abgesperrt sind. Im betätigten, also bestromten Zustand der dritten und vierten Vorsteuerventile 64, 68 sind die ersten und zweiten ABS-Auslassventile 130, 134 geöffnet, sodass die Radbremsleitungen 58, 60 dann über die Zweige 72a, 72b entlüftet werden.

In einer dazu alternativen Anordnung kann der Steuerdruck für die ersten und zweiten ABS-Einlassventile 128, 132 und die ersten und zweiten ABS-Auslassventile 133, 134 auch direkt von der ersten Betriebsbremsleitung 23 abgenommen werden. Dies wird durch das Leitungsstück 74 angezeigt.

Figur 5 illustriert nun den Einbau von zwei Relaisventilmodulen 1 in ein Bremssystem 202 eines Nutzfahrzeugs 200. Das Nutzfahrzeug 200 ist mit einem Anhänger 201 ausgestattet, der hier nur schematisch dargestellt ist. Das Nutzfahrzeug 200 weist eine Vorderachse VA und eine Hinterachse HA auf. Ein elektronisch steuerbares pneumatisches Bremssystem 202 hat für die Vorderachse VA erste und zweite Radbremsen 204, 206 und für die Hinterachse HA dritte und vierte Radbremsen 208, 210. Das Bremssystem 202 verfügt über ein Zentralmodul 220 sowie einen Bremswertgeber BST. In der Vorderachse VA ist ein Vorderachsmodulator AVP vorgesehen, der hier als Relaisventilmodul 1 ausgebildet ist. In der Hinterachse HA ist ein Hinterachsmodulator 222 angeordnet, der hier herkömmlich ausgebildet ist. Es soll aber verstanden werden, dass auch der Hinterachsmodulator 222 oder ein Zusatzachsmodulator mittels des Relaisventilmoduls 1 ausgebildet sein kann.

Der Bremswertgeber BST weist einen pneumatischen Bremswertgeberanschluss 212 und einen elektrischen Bremswertgeberanschluss 214 auf. Über den pneumatischen Bremswertgeberanschluss 212 kann der Bremssteuerdruck pBS ausgesteuert werden. Über den elektrischen Bremswertgeberanschluss 214 wird ein Bremssignal SB an dem Zentralmodul 220 bereitgestellt.

Der Bremswertgeber BST ist über eine erste Bremswertgeberleitung 216 mit dem Bremssteuerdruckanschluss 4 des als Vorderachsmodulator AVP ausgebildeten Relaisventilmoduls 1 verbunden. Das als Vorderachsmodulator AVP ausgebildete Relaisventilmodul 1 weist einen ersten und einen zweiten Betriebsbremsanschluss 6, 8 auf, die hier mit ersten und zweiten ABS-Modulen 240, 242 verbunden sind. Der Vorderachsmodulator AVP ist auch über eine erste elektrische Leitung 224 mit dem Zentralmodul 220 verbunden und empfängt die ersten und zweiten Schaltsignale S1, S2 für das als Vorderachsmodulator AVP ausgebildete Relaisventilmodul 1. Über diese erste elektrische Leitung 224 ist auch der Drucksensor 22 des Vorderachsmodulators AVP mit dem Zentralmodul 220 verbunden, sodass das Zentralmodul 220 einerseits die Spannungsversorgung für den Drucksensor 22 bereitstellen kann, andererseits auch das Bremsdrucksignal SB an das Zentralmodul 220 rückgeführt wird. Der Betriebsbremsdruck pB für die ersten und zweiten Radbremsen 206, 204 kann also sowohl pneumatisch als auch elektrisch mittels des Relaisventilmoduls 1, das als Vorderachsmodulator AVP ausgebildet ist, ausgesteuert werden.

Ferner weist das Bremssystem 202 ein Anhängersteuermodul TVP auf, welches hier wiederum als Relaisventilmodul 1 ausgebildet ist. Der Bremswertgeber BST weist eine zweite Bremswertgeberleitung 218 auf, die den pneumatischen Bremswertgeberanschluss 212 mit dem Bremssteuerdruckanschluss 4 des als Anhängersteuermodul TVP ausgebildeten Relaisventilmoduls 1 verbindet. Ferner ist das als Anhängersteuermodul TVP ausgebildete Relaisventilmodul 1 über eine zweite elektrische Leitung 226 mit dem Zentralmodul 220 verbunden und empfängt von diesem die entsprechenden ersten und zweiten Schaltsignale S1, S2. Über diese zweite elektrische Leitung 226 ist auch der Drucksensor 22 des Anhängersteuermodul TVP mit dem Zentralmodul 220 verbunden, sodass das Zentralmodul 220 einerseits die Spannungsversorgung für den Drucksensor 22 bereitstellen kann, andererseits auch das Bremsdrucksignal SB an das Zentralmodul 220 rückgeführt wird. Da das Relaisventilmodul 1 als Anhängersteuermodul TVP ausgebildet ist, weist es nur einen Betriebsbremsanschluss 6 auf, der hier mit dem Anhängersteueranschluss (gelber Kupplungskopf, bzw. glad hand BLUE) verbunden ist. Der entsprechend vorgesehene Anhängerversorgungsanschluss 40 ist mit dem Anhängerversorgungsdruckanschluss (roter Kupplungskopf) 232 verbunden und stellt Versorgungsdruck pV für den Anhänger 201 bereit. Auch der Anhänger 201 kann in diesem Ausführungsbeispiel also sowohl pneumatisch als auch elektrisch gesteuert werden.

### Bezugszeichenliste (Teil der Beschreibung)

- 1: Relaisventilmodul
- 2: Vorratsanschluss
- 4: Bremssteuerdruckanschluss
- 5: Entlüftung
- 6: erster Betriebsbremsanschluss
- 8: zweiter Betriebsbremsanschluss
- 10: Relaisventil
- 10.1: Relaisventil-Vorratsanschluss
- 10.2: Relaisventil-Arbeitsanschluss
- 10.3: Relaisventil-Entlüftungsanschluss
- 10.4: Relaisventil-Steueranschluss
- 12: Vorsteuereinheit
- 14: Einlassventil
- 14.1: erster Einlassventilanschluss
- 14.2: zweiter Einlassventilanschluss
- 14.3: dritter Einlassventilanschluss
- 15: 3/2-Wege-Ventil
- 16: Auslassventil
- 16.1: erster Auslassventilanschluss
- 16.2: zweiter Auslassventilanschluss
- 16.3: dritter Auslassventilanschluss
- 17: 3/2-Wege-Ventil
- 20: Wechselventil
- 20.1: erster Wechselventileingang
- 20.2: zweiter Wechselventileingang
- 20.3: Wechselventilausgang
- 21: erste Vorratsleitung
- 22: Drucksensor
- 23: erste Betriebsbremsleitung
- 24: Vorsteuerdruckleitung
- 25: zweite Betriebsbremsleitung
- 26: erste Steuerleitung
- 27: Bremssteuerleitung
- 28: erste Vorratsabzweigleitung
- 29: erste Entlüftungsleitung
- 30: Verbindungsleitung
- 31: Drossel
- 32: Druckmessleitung
- 33: zweite Vorratsabzweigleitung
- 34: Zweite Steuerleitung
- 40: Anhängerversorgungsanschluss
- 42: Schnellentlüftungsventil
- 44: weiteres Wechselventil
- 50: ABS-Einheit
- 56A: erster Achsbremsleitung
- 56B: zweiter Achsbremsleitung
- 58: erste Radbremsleitung
- 60: zweite Radbremsleitung
- 62: erstes Vorsteuerventil
- 64: drittes Vorsteuerventil
- 66: zweites Vorsteuerventil
- 68: viertes Vorsteuerventil
- 70: dritte Steuerleitung
- 72: zweite Entlüftungsleitung
- 72a: erster Zweig
- 72b: zweiter Zweig
- 74: Leitungsstück
- 128: erstes ABS-Einlassventil
- 130: erstes ABS-Auslassventil
- 132: zweites ABS-Einlassventil
- 134: zweites ABS-Auslassventil
- 200: Nutzfahrzeug
- 201: Anhänger
- 202: elektronisch steuerbares pneumatisches Bremssystem
- 204: erste Radbremse
- 206: zweite Radbremse
- 208: dritte Radbremse
- 210: vierte Radbremse
- 212: pneumatischer Bremswertgeberanschluss
- 214: elektrischer Bremswertgeberanschluss
- 216: erste Bremswertgeberleitung
- 218: zweite Bremswertgeberleitung
- 220: Zentralmodul
- 222: Hinterachsmodulator
- 224: erste elektrische Leitung
- 226: zweite elektrische Leitung
- 230: Anhängersteueranschluss (gelber Kupplungskopf)
- 232: Anhängerversorgungsdruckanschluss (roter Kupplungskopf)
- 240: erstes ABS-Modul
- 242: zweites ABS-Modul
- AVP: Achsmodulator
- BST: Bremswertgeber
- HA: Hinterachse
- L: erste Fahrzeugseite
- pB: Betriebsbremsdruck
- pBS: Bremssteuerdruck
- pST: Streckbremsdrucks
- pV: Vorratsdruck
- pVS: Vorsteuerdruck
- R: zweite Fahrzeugseite
- S1: erstes Schaltsignal
- S2: zweites Schaltsignal
- SB: Drucksignal
- TVP: Anhängersteuermodul
- VA: Vorderachse

## Patentansprüche

1. Relaisventilmodul (1) für ein elektronisch steuerbares pneumatisches Bremssystem (202) für die Betätigung von Radbremsen eines Nutzfahrzeugs (200), mit
einem Vorratsanschluss (2) zum Empfangen eines Vorratsdrucks (pV);
einem Bremssteuerdruckanschluss (4) zum Empfangen eines Bremssteuerdrucks (pBS);
wenigsten einen ersten Betriebsbremsanschluss (6) zum Aussteuern eines Betriebsbremsdrucks (pB);
einem Relaisventil (10) mit einem mit dem Vorratsanschluss (2) verbundenen Relaisventil-Vorratsanschluss (10.1), einem mit dem ersten Betriebsbremsanschluss (6) verbundenen Relaisventil-Arbeitsanschluss (10.2), einem Relaisventil-Entlüftungsanschluss (10.3) und einem Relaisventil-Steueranschluss (10.4),
einer mit dem Vorratsanschluss (2) verbundenen elektropneumatischen Vorsteuereinheit (12) zum Bereitstellen eines Vorsteuerdrucks (pVS);
**dadurch gekennzeichnet, dass**
die Vorsteuereinheit (12) ein elektrisch schaltbares Einlassventil (14) und ein elektrisch schaltbares Auslassventil (16) aufweist, und
ein Wechselventil (20) mit einem ersten Wechselventileingang (20.1), einem zweiten Wechselventileingang (20.2) und einem Wechselventilausgang (20.3);
wobei der erste Wechselventileingang (20.1) mit dem Bremssteuerdruckanschluss (4) zum Empfangen des Bremssteuerdrucks (pBS), der zweite Wechselventileingang (20.2) mit der Vorsteuereinheit (12) zum Empfangen des Vorsteuerdrucks (pVS) und der Wechselventilausgang (20.3) mit dem Relaisventil-Steueranschluss (10.4) verbunden ist, zum Aussteuern des jeweils höheren des Bremssteuerdrucks (pBS) oder des Vorsteuerdrucks (pVS) an dem Relaisventil-Steueranschluss (10.4).

2. Relaisventilmodul (1) nach Anspruch 1, ferner aufweisend einen Drucksensor (22) zum Erfassen des Betriebsbremsdrucks (pB) und Bereitstellen eines entsprechenden Bremsdrucksignals (SB).

3. Relaisventilmodul (1) nach Anspruch 1, wobei das Einlassventil (14) und das Auslassventil (16) jeweils als 3/2-Wege-Ventile (15, 17) ausgebildet sind.

4. Relaisventilmodul (1) nach Anspruch 3, wobei
das Einlassventil (14) einen mit dem Vorratsanschluss (2) verbundenen ersten Einlassventilanschluss (14.1), einen mit einer zum zweiten Wechselventilanschluss (20.2) führenden Vorsteuerdruckleitung (24) verbundenen oder verbindbaren zweiten Einlassventilanschluss (14.2) und einen dritten Einlassventilanschluss (14.3) aufweist.

5. Relaisventilmodul (1) nach Anspruch 3 oder 4, wobei
das Auslassventil (16) einen mit einer Entlüftung (5) verbundenen ersten Auslassventilanschluss (16.1), einen mit der Vorsteuerdruckleitung (24) verbundenen zweiten Auslassventilanschluss (16.2) und einen dritten Auslassventilanschluss (16.3) aufweist.

6. Relaisventilmodul (1) nach Anspruch 4 und 5, wobei der dritte Einlassventilanschluss (14.3) mit dem dritten Auslassventilanschluss (16.3) verbunden ist.

7. Relaisventilmodul (1) nach Anspruch 4, wobei das Auslassventil (16) einen mit dem zweiten Einlassventilanschluss (14.2) verbundenen ersten Auslassventilanschluss (16.1), einen mit der Vorsteuerdruckleitung (24) verbundenen zweiten Auslassventilanschluss (16.2) und einen dritten Auslassventilanschluss (14.3) aufweist.

8. Relaisventilmodul (1) nach einem der vorstehenden Ansprüche zur Verwendung als Achsmodulator (AVP), insbesondere Vorderachsmodulator (AVP),
wobei der erste Betriebsbremsanschluss (6) für eine erste Fahrzeugseite (L) vorgesehen ist, und das Relaisventilmodul (1) ferner einen mit dem Relaisventil-Arbeitsanschluss (10.2) verbundenen zweiten Betriebsbremsanschluss (8) zum Aussteuern des Betriebsbremsdrucks (pB) für eine zweite Fahrzeugseite (R) aufweist.

9. Relaisventilmodul (1) nach Anspruch 8, aufweisend
ein erstes ABS-Einlassventil (128) und ein zweites ABS-Einlassventil (132); und ein erstes ABS-Auslassventil (130) und ein zweites ABS-Auslassventil (134) für mindestens einen Radbremszylinder (204, 206) jeder Seite (L, R) der Fahrzeugachse (VA),
welche jeweils als ein druckgesteuertes Membranventil (128, 130, 132, 134) mit einem zugeordneten Vorsteuerventil (62, 64, 66, 68) ausgebildet sind, wobei diese Vorsteuerventile (62, 64, 66, 68) als getaktet steuerbare 3/2-WegeVentile ausgeführt sind, über die jeweils ein Steuerdruckraum des zugeordneten Membranventils (128, 130, 132, 134) wechselweise mit Betriebsbremsdruck (pB) beziehungsweise mit an dem Relaisventil-Steueranschluss (11.4) des Relaisventils (11) abgegriffenem Steuerdruck (pVS, pBS) oder mit dem Umgebungsdruck beaufschlagbar ist.

10. Relaisventilmodul (1) nach einem der vorstehenden Ansprüche 1 bis 7 zur Verwendung als Anhängersteuermodul (TVP),
wobei der erste Betriebsbremsanschluss (6) zur Verbindung mit einem Anhängersteueranschluss (230) ausgebildet ist, und das Relaisventilmodul (1) ferner einen Anhängerversorgungsanschluss (40) aufweist, der zur Verbindung mit einem Anhängerversorgungsdruckanschluss (232) vorgesehen ist zum Versorgen eines Anhängers (201) mit Vorratsdruck (pV).

11. Relaisventilmodul (1) nach Anspruch 10, wobei an den Anhängerversorgungsanschluss (40) ein Schnellentlüftungsventil (42) angeschlossen ist.

12. Relaisventilmodul (1) nach Anspruch 10 oder 11, wobei an den Bremssteuerdruckanschluss (4) ein weiteres Wechselventil (44) angeschlossen ist, welches jeweils den höheren des Bremssteuerdrucks (pBS) und eines Streckbremsdrucks (pST) an dem Bremssteuerdruckanschluss (4) aussteuert.

13. Elektronisch steuerbares pneumatisches Bremssystem (202), mit
einem Relaisventilmodul (1) nach Anspruch 8 als Vorderachsmodulator (AVP),
einem Relaisventilmodul (1) nach Anspruch 10 als Anhängersteuermodul (TVP),
einem Bremswertgeber (BST) mit wenigstes einem pneumatischen Bremswertgeberanschluss (212) und einem elektrischen Bremswertgeberanschluss (214),
einem Zentralmodul (220), und
einem Hinterachsmodulator (222), wobei
der pneumatische Bremswertgeberanschluss (212) mit dem Bremssteuerdruckanschluss (4) des Vorderachsmodulators (AVP) und/oder dem Bremssteuerdruckanschluss (4) des Anhängersteuermoduls (TVP) verbunden ist; und
der elektrische Bremswertgeberanschluss (212) mit dem Zentralmodul (220) verbunden ist.

14. Verfahren zum bedarfsweisen Herstellen eines Achsmodulators (AVP) und eines Anhängersteuermoduls (TVP), mit den Schritten:
- Bereitstellen oder Herstellen eines Relaisventilmoduls (1) nach einem der Ansprüche 1 bis 7; und
a) bedarfsweises Vorsehen oder Freigeben eines zweiten Betriebsbremsanschlusses (8) zum Aussteuern des Betriebsbremsdrucks (pB) für eine zweite Fahrzeugseite (R) zum Herstellen des Achsmodulators (AVP); oder
b) bedarfsweises Vorsehen oder Freigeben eines Anhängerversorgungsanschlusses (40), der zur Verbindung mit einem Anhängerversorgungsdruckanschluss(232) vorgesehen ist zum Versorgen eines Anhängers mit Vorratsdruck (pV) zum Herstellen des Anhängersteuermoduls (TVP).

15. Nutzfahrzeug (200) mit einem elektronisch steuerbaren pneumatischen Bremssystem (202) nach Anspruch 13.

## Claims

1. Relay valve module (1) for an electronically controllable pneumatic brake system (202) for actuating wheel brakes of a commercial vehicle (200), comprising
a supply connection (2) for receiving a supply pressure (pV);
a brake control pressure connection (4) for receiving a brake control pressure (pBS);
at least one first service brake connection (6) for controlling a service brake pressure (pB);
a relay valve (10) having a relay valve supply connection (10.1) connected to the supply connection (2), a relay valve working connection (10.2) connected to the first service brake connection (6), a relay valve vent connection (10.3), and a relay valve control connection (10.4);
an electropneumatic pilot control unit (12) connected to the supply connection (2) for providing a pilot control pressure (pVS);
**characterized in that**
the pilot control unit (12) comprises an electrically switchable inlet valve (14) and an electrically switchable outlet valve (16), and
a shuttle valve (20) having a first shuttle valve inlet (20.1), a second shuttle valve inlet (20.2) and a shuttle valve outlet (20.3);
the first shuttle valve inlet (20.1) being connected to the brake control pressure connection (4) for receiving the brake control pressure (pBS), the second shuttle valve inlet (20.2) being connected to the pilot control unit (12) for receiving the pilot control pressure (pVS), and the shuttle valve outlet (20.3) being connected to the relay valve control connection (10.4) for controlling the higher of the brake control pressure (pBS) or the pilot control pressure (pVS) at the relay valve control connection (10.4).

2. Relay valve module (1) according to claim 1, further comprising a pressure sensor (22) for detecting the service brake pressure (pB) and providing a corresponding brake pressure signal (SB).

3. Relay valve module (1) according to claim 1, wherein the inlet valve (14) and the outlet valve (16) are each designed as 3/2-way valves (15, 17).

4. Relay valve module (1) according to claim 3, wherein
the inlet valve (14) comprises a first inlet valve connection (14.1) connected to the supply connection (2), a second inlet valve connection (14.2), which is connected or connectable to a pilot control pressure line (24) leading to the second shuttle valve connection (20.2), and a third inlet valve connection (14.3).

5. Relay valve module (1) according to either claim 3 or claim 4, wherein
the outlet valve (16) comprises a first outlet valve connection (16.1) connected to a vent (5), a second outlet valve connection (16.2) connected to the pilot pressure line (24), and a third outlet valve connection (16.3).

6. Relay valve module (1) according to claims 4 and 5, wherein the third inlet valve connection (14.3) is connected to the third outlet valve connection (16.3).

7. Relay valve module (1) according to claim 4, wherein the outlet valve (16) comprises a first outlet valve connection (16.1) connected to the second inlet valve connection (14.2), a second outlet valve connection (16.2) connected to the pilot control pressure line (24), and a third outlet valve connection (14.3).

8. Relay valve module (1) according to any of the preceding claims for use as an axle modulator (AVP), in particular a front-axle modulator (AVP),
wherein the first service brake connection (6) is provided for a first vehicle side (L), and the relay valve module (1) further comprises a second service brake connection (8) connected to the relay valve working connection (10.2) for controlling the service brake pressure (pB) for a second vehicle side (R).

9. Relay valve module (1) according to claim 8, comprising
a first ABS inlet valve (128) and a second ABS inlet valve (132); and a first ABS outlet valve (130) and a second ABS outlet valve (134) for at least one wheel brake cylinder (204, 206) on each side (L, R) of the vehicle axle (VA),
which valves are each designed as a pressure-controlled membrane valve (128, 130, 132, 134) having an associated pilot valve (62, 64, 66, 68), wherein said pilot valves (62, 64, 66, 68) are designed as 3/2-way valves which can be controlled in a clocked manner and via which in each case a control pressure chamber of the associated membrane valve (128, 130, 132, 134) can be alternately supplied with service brake pressure (pB) or with control pressure (pVS, pBS) taken from the relay valve control connection (11.4) of the relay valve (11) or with the ambient pressure.

10. Relay valve module (1) according to any of the preceding claims 1 to 7 for use as a trailer control module (TVP),
wherein the first service brake connection (6) is designed to connect to a trailer control connection (230), and the relay valve module (1) further comprises a trailer supply connection (40) which is provided for connection to a trailer supply pressure connection (232) for supplying a trailer (201) with supply pressure (pV).

11. Relay valve module (1) according to claim 10, wherein a quick-acting ventilation valve (42) is connected to the trailer supply connection (40).

12. Relay valve module (1) according to either claim 10 or claim 11, wherein a further shuttle valve (44) is connected to the brake control pressure connection (4), which further shuttle valve in each case controls the higher of the brake control pressure (pBS) and an underrun brake pressure (pST) at the brake control pressure connection (4).

13. Electronically controllable pneumatic brake system (202), comprising
a relay valve module (1) according to claim 8 as a front-axle modulator (AVP),
a relay valve module (1) according to claim 10 as a trailer control module (TVP),
a brake value transmitter (BST) having at least one pneumatic brake value transmitter connection (212) and an electrical brake value transmitter connection (214),
a central module (220), and
a housing (222); wherein
the pneumatic brake value transmitter connection (212) is connected to the brake control pressure connection (4) of the front axle modulator (AVP) and/or the brake control pressure connection (4) of the trailer control module (TVP); and
the electrical brake value transmitter connection (212) is connected to the central module (220).

14. Method for producing an axle modulator (AVP) and a trailer control module (TVP) as required, comprising the steps of:
- providing or producing a relay valve module (1) according to any of claims 1 to 7; and
a) providing or enabling, as required, a second service brake connection (8) for controlling the service brake pressure (pB) for a second vehicle side (R) in order to produce the axle modulator (AVP); or
b) providing or enabling, as required, a trailer supply connection (40), which is provided for connection to a trailer supply pressure connection (232) for supplying a trailer with supply pressure (pV), in order to produce the trailer control module (TVP).

15. Commercial vehicle (200) comprising an electronically controllable pneumatic brake system (202) according to claim 13.

## Revendications

1. Module de soupape de relais (1) pour un système de frein pneumatique (202) à commande électronique pour l'actionnement de freins de roues d'un véhicule utilitaire (200), comportant
un raccord de réserve (2) destiné à recevoir une pression de réserve (pV) ;
un raccord de pression de commande de frein (4) destiné à recevoir une pression de commande de frein (pBS) ;
au moins un premier raccord de frein de service (6) destiné à commander une pression de frein de service (pB) ;
un soupape de relais (10) comportant un raccord de réserve de soupape de relais (10.1) relié au raccord de réserve (2), un raccord de travail de soupape de relais (10.2) relié au premier raccord de frein de service (6), un raccord de purge de soupape de relais (10.3) et un raccord de commande de soupape de relais (10.4),
une unité de pilotage électropneumatique (12) reliée au raccord de réserve (2) destinée à fournir une pression de pilotage (pVS) ;
**caractérisé en ce que**
l'unité de pilotage (12) présente une soupape d'admission (14) pouvant être commutée électriquement et une soupape d'échappement (16) pouvant être commutée électriquement et
une soupape de sélection (20) comportant une première entrée de soupape de sélection (20.1), une seconde entrée de soupape de sélection (20.2) et une sortie de soupape de sélection (20.3) ;
dans lequel la première entrée de soupape de sélection (20.1) est reliée au raccord de pression de commande de frein (4) pour la réception de la pression de commande de frein (pBS), la seconde entrée de soupape de sélection (20.2) est reliée à l'unité de pilotage (12) pour la réception de la pression de pilotage (pVS) et la sortie de soupape de sélection (20.3) est reliée au raccord de commande de soupape de relais (10.4), afin de commander la pression respective la plus élevée parmi la pression de commande de frein (pBS) ou la pression de pilotage (pVS) au niveau du raccord de commande de soupape de relais (10.4).

2. Module de soupape de relais (1) selon la revendication 1, présentant en outre un capteur de pression (22) destiné à détecter la pression de frein de service (pB) et à fournir un signal de pression de frein (SB) correspondant.

3. Module de soupape de relais (1) selon la revendication 1, dans lequel la soupape d'admission (14) et la soupape d'échappement (16) sont respectivement conçues comme des soupapes à 3/2 voies (15, 17).

4. Module de soupape de relais (1) selon la revendication 3, dans lequel
la soupape d'admission (14) présente un premier raccord de soupape d'admission (14.1) relié au raccord de réserve (2), un deuxième raccord de soupape d'admission (14.2) conduisant au second raccord de soupape de sélection (20.2) relié ou pouvant être relié à une conduite de pression de pilotage (24) et un troisième raccord de soupape d'admission (14.3).

5. Module de soupape de relais (1) selon la revendication 3 ou 4, dans lequel
la soupape d'échappement (16) présente un premier raccord de soupape d'échappement (16.1) relié à une purge (5), un deuxième raccord de soupape d'échappement (16.2) relié à la conduite de pression de pilotage (24) et un troisième raccord de soupape d'échappement (16.3).

6. Module de soupape de relais (1) selon les revendications 4 et 5, dans lequel le troisième raccord de soupape d'admission (14.3) est relié au troisième raccord de soupape d'échappement (16.3).

7. Module de soupape de relais (1) selon la revendication 4, dans lequel la soupape d'échappement (16) présente un premier raccord de soupape d'échappement (16.1) relié au deuxième raccord de soupape d'admission (14,2), un deuxième raccord de soupape d'échappement (16.2) relié à la conduite de pression de pilotage (24) et un troisième raccord de soupape d'échappement (14.3).

8. Module de soupape de relais (1) selon l'une des revendications précédentes pour une utilisation en tant que modulateur d'essieu (AVP), en particulier modulateur d'essieu avant (AVP),
dans lequel le premier raccord de frein de service (6) est prévu pour un premier côté de véhicule (L) et le module de soupape de relais (1) présente en outre un second raccord de frein de service (8) relié au raccord de travail de soupape de relais (10.2) pour la commande de la pression de frein de service (pB) pour un second côté de véhicule (R).

9. Module de soupape de relais (1) selon la revendication 8, présentant
une première soupape d'admission ABS (128) et une seconde soupape d'admission ABS (132) ; et une première soupape d'échappement ABS (130) et une seconde soupape d'échappement ABS (134) pour au moins un cylindre de frein de roue (204, 206) de chaque côté (L, R) de l'essieu de véhicule (VA),
qui sont conçues respectivement comme une soupape à membrane commandée par pression (128, 130, 132, 134) avec une soupape de pilotage (62, 64, 66, 68) associée, dans lequel ces soupapes de pilotage (62, 64, 66, 68) sont réalisées comme des soupapes à 3/2 voies à commande cadencée, par l'intermédiaire desquelles respectivement un espace de pression de commande de la soupape à membrane (128, 130, 132, 134) associée peut être alimenté sélectivement avec la pression de frein de service (pB) ou par une pression de commande (pVS, pBS) prélevée sur le raccord de commande de soupape de relais (11.4) de la soupape de relais (11) ou par la pression ambiante.

10. Module de soupape de relais (1) selon l'une des revendications précédentes 1 à 7 pour une utilisation en tant que module de commande de remorque (TVP),
dans lequel le premier raccord de frein de service (6) est conçu pour une liaison avec un raccord de commande de remorque (230) et le module de soupape de relais (1) présente en outre un raccord d'alimentation de remorque (40), qui est prévu pour une liaison avec un raccord de pression d'alimentation de remorque (232) pour l'alimentation d'une remorque (201) en pression de réserve (pV).

11. Module de soupape de relais (1) selon la revendication 10, dans lequel une soupape de purge rapide (42) est raccordée au raccord d'alimentation de remorque (40).

12. Module de soupape de relais (1) selon la revendication 10 ou 11, dans lequel une autre soupape de sélection (44) est raccordée au raccord de pression de commande de frein (4), qui commande la pression respectivement la plus élevée parmi la pression de commande de frein (pBS) et une pression de frein par traction (pST) au niveau du raccord de pression de commande de frein (4).

13. Système de frein pneumatique (202) à commande électronique, comportant
un module de soupape de relais (1) selon la revendication 8 en tant que modulateur d'essieu avant (AVP),
un module de soupape de relais (1) selon la revendication 10 en tant que module de commande de remorque (TVP),
un générateur de valeur de frein (BST) comportant au moins un raccord de générateur de valeur de frein pneumatique (212) et un raccord de générateur de valeur de frein électrique (214),
un module central (220) et
un modulateur d'essieu arrière (222), dans lequel
le raccord de générateur de valeur de frein pneumatique (212) est relié au raccord de pression de commande de frein (4) du modulateur d'essieu avant (AVP) et/ou au raccord de pression de commande de frein (4) du module de commande de remorque (TVP) ; et
le raccord de générateur de valeur de frein électrique (212) est relié au module central (220).

14. Procédé de fabrication à la demande d'un modulateur d'essieu (AVP) et d'un module de commande de remorque (TVP), comportant les étapes :
- de fourniture ou de fabrication d'un module de soupape de relais (1) selon l'une des revendications 1 à 7 ; et
a) de prévision ou de libération à la demande d'un second raccord de frein de service (8) pour la commande de la pression de frein de service (pB) pour un second côté de véhicule (R) afin de fabriquer le modulateur d'essieu (AVP) ; ou
b) de prévision ou de libération à la demande d'un raccord d'alimentation de remorque (40), qui est prévu pour une liaison au raccord de pression d'alimentation de remorque (232) pour l'alimentation d'une remorque avec une pression de réserve (pV) pour la fabrication du module de commande de remorque (TVP).

15. Véhicule utilitaire (200) comportant un système de frein pneumatique (202) à commande électronique selon la revendication 13.
